# EUROPÄISCHE PATENTANMELDUNG

(11) **EP 4 826 689 A1**
(43) Veröffentlichungstag der Anmeldung: **21.10.2026**
(21) Anmeldenummer: 25203845.0
(22) Anmeldetag: 22.09.2025
(51) Int. Cl.: G07F 17/32, A63F 9/04, A63F 13/35, A63F 13/655, A63F 13/75, A63F 3/00

(54) **SYSTEM ZUM BETREIBEN EINES SOFTWARE-SPIELS, SOWIE EIN VERFAHREN ZUM BETREIBEN EINES SOFTWARE-SPIELS**

(30) Priorität: 14.04.2025 DE 202025000971 U
(71) Anmelder: Tosun, Erkan, 10997 Berlin (DE)
(72) Erfinder: Tosun, Erkan, 10997 Berlin (DE)
(74) Vertreter: Schmidt-Martens, Hauke Heinrich

(57) **Zusammenfassung**

Die Erfindung betrifft ein System (1) zum Betreiben eines Software-Spiels, umfassend: eine digitale Software-Plattform (2), welche eingerichtet ist, das Software-Spiel bereitzustellen, und eine Erfassungseinrichtung (3), welche eingerichtet ist, einen Überwachungsbereich (4) zu erfassen. Das System (1) ist dadurch gekennzeichnet, dass eine mechanische Würfelvorrichtung (5) zumindest teilweise innerhalb des Überwachungsbereichs (4) angeordnet ist und eingerichtet ist, eine Zufallszahl zu erzeugen, die Erfassungseinrichtung (3), eingerichtet ist, einen mechanischen Würfelvorgang zum Erzeugen der Zufallszahl zu erfassen, und die Software-Plattform (2) eingerichtet ist, das Software-Spiel in Abhängigkeit des erfassten Würfelvorgangs bereitzustellen. Mit dem hier vorgeschlagenen System zum Betreiben eines Software-Spiels wird ein Höchstmaß an Transparenz und Fairness gewährleistet.

## Beschreibung

Die Erfindung betrifft ein System zum Betreiben eines Software-Spiels, sowie ein Verfahren zum Betreiben eines Software-Spiels.

Bisherige Online-Würfelspiele, wie Backgammon, verwenden digitale Zufallsgeneratoren (RNGs), welche unter Anwendung eines Algorithmus eine Zufallszahl erzeugen. Diese Systeme sind für Spieler nicht einsehbar und können daher kein höchstes Vertrauen im Hinblick auf Fairness und Manipulationssicherheit gewährleisten. Die Integration realer Würfelergebnisse in Online-Spiele existiert derzeit nicht in einer vollständig automatisierten Form. Ebenso existiert keine bekannte Systemkombination mit einer übergeordneten Live-Stream-Kamera, die während des Spiels eine visuelle Darstellung der realen Würfelprozesse übernimmt und als Schnittstelle zwischen realem Würfelergebnis und Spielinterface dient.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft ein System zum Betreiben eines Software-Spiels, umfassend:
- eine digitale Software-Plattform, welche eingerichtet ist, das Software-Spiel bereitzustellen, und
- eine Erfassungseinrichtung, welche eingerichtet ist, einen Überwachungsbereich zu erfassen.

Das System ist vor allem dadurch gekennzeichnet, dass - eine mechanische Würfelvorrichtung zumindest teilweise innerhalb des Überwachungsbereichs angeordnet ist und eingerichtet ist, eine Zufallszahl zu erzeugen,
- die Erfassungseinrichtung, eingerichtet ist, einen mechanischen Würfelvorgang zum Erzeugen der Zufallszahl zu erfassen, und
- die Software-Plattform eingerichtet ist, das Software-Spiel in Abhängigkeit des erfassten Würfelvorgangs bereitzustellen.

Die Erfindung basiert auf den folgenden Erkenntnissen: Täglich spielen weltweit über 20 Millionen Menschen Online-Backgammon auf verschiedenen Spieleplattformen. Ein bedeutender Anteil - etwa zehn Prozent dieser Spieler - nimmt dabei professionell an Echtgeldpartien oder Turnieren teil, um entweder ihren Lebensunterhalt zu bestreiten oder sich zumindest ein regelmäßiges Zusatzeinkommen zu sichern.

Backgammon ist ein strategisches Brettspiel, bei dem der Spielverlauf und letztlich auch der Ausgang - Sieg oder Niederlage - sowohl durch das taktische Geschick der Spieler als auch maßgeblich durch die Ergebnisse der Würfelwürfe bestimmt wird. Im Online-Bereich werden diese Würfelergebnisse durch sogenannte Zufallszahlengeneratoren (Random Number Generators, RNG) erzeugt, die sicherstellen sollen, dass das Spiel zufallsbasiert und fair abläuft.

Trotzdem herrscht unter einem großen Teil der Online-Spieler großes Misstrauen: Schätzungsweise rund 70 Prozent der Online-Backgammon-Spieler äußern Unzufriedenheit mit der Vertrauenswürdigkeit der Plattformen, auf denen sie spielen. Der häufig geäußerte Vorwurf lautet, dass die vom System generierten Würfelergebnisse manipuliert sein könnten, wodurch ein fairer und chancengleicher Wettbewerb nicht mehr gewährleistet wäre.

Ziel der vorliegenden Erfindung ist es daher, eine neue Art von Online-Backgammon-Plattform zu entwickeln, die ein Höchstmaß an Transparenz und Fairness bietet. Durch entsprechende technische und konzeptionelle Maßnahmen soll der Verdacht einer möglichen Manipulation der Würfelergebnisse von vornherein ausgeschlossen und somit das Vertrauen der Spieler dauerhaft gestärkt werden.

Die geschilderten Probleme behebt die erfindungsgemäße Lösung, indem die Zufallszahl mittels der mechanischen Würfelvorrichtung erzeugt wird. Durch die Erfassung mittels der Erfassungseinrichtung kann der Würfelvorgang von Benutzern des Spiels nachvollzogen werden. Hierdurch wird ein vernetztes Gesamtsystem geschaffen, das eine automatisierte, manipulationssichere und benutzerfreundliche Erfassung und Auswertung von Würfelergebnissen ermöglicht.

Durch die Erfindung wird eine technische Verknüpfung physischer Zufallsgeneratoren mit einer digitalen Spielumgebung, insbesondere im Bereich der Online-Glücksspiele, erreicht. Sie ist für den Bereich der manipulationssicheren Zufallszahlenerzeugung bei Würfelspielen geeignet und beinhaltet darüber hinaus die audiovisuelle Integration einer Live-Stream-Kamera-Applikation zur Erhöhung der Spieltransparenz und Nutzerinteraktion. Besonderer Fokus liegt auf der Anwendung bei dem traditionellen Spiel Backgammon, wobei die Erfindung universell auf weitere Würfelspiele erweiterbar ist. Typische Anwendungsfelder umfassen: Gesellschafts- und Brettspiele; Überwachung und Regulierung von Glücksspielen, insbesondere in Casinos; Organisation und Auswertung von Turnieren mit Würfelelementen, z. B. im eSports-Bereich; Übertragung und Integration in Remote-Spielumgebungen, einschließlich Streaming-Formaten und hybriden Veranstaltungsformen.

Kern der Erfindung ist demnach, eine physische, sensorisch überwachte Würfelmaschine mit einer Online-Spielplattform (insbesondere für Backgammon) zu kombinieren. Ziel ist es, das gewürfelte Ergebnis real zu erzeugen, sicher zu erfassen, digital zu übertragen und ohne Verzögerung in das Spielsystem einzubinden. Eine Live-Stream-Kamera ergänzt das System visuell und auditiv und erhöht sowohl das Vertrauen in den Spielablauf als auch die Immersion für die Nutzer.

Beispielsweise wird ein Online-Spiel als Software-Spiel mittels der Software-Plattform bereitgestellt.

Die Erfassungseinrichtung umfasst vorzugsweise eine Kameraeinrichtung. Weiter vorzugsweise ist die Kameraeinrichtung eine Live-Stream-Kamera, welche optische und akustische Informationen des Würfelvorgangs erfasst und in Echtzeit bereitstellt. Hierdurch wird das System visuell und auditiv ergänzt. Zudem wird das Vertrauen in den Spielablauf als auch die Immersion für die Nutzer erhöht.

Die mechanische Würfelvorrichtung umfasst vorzugsweise einen oder mehrere Würfel. Weiter vorzugsweise umfasst die Würfelvorrichtung einen oder mehrere, besonders bevorzugt zwei, Präzisionswürfel die auf einer Membran als Auflagefläche liegen. Zum Erzeugen der Zufallszahl wird die Membran weiter vorzugsweise durch eine Vibration (beispielsweise mittels Luftdrucks) in Bewegung versetzt. Diese führt zum Würfeln der Würfel.

Die Würfelvorrichtung ist vorzugsweise eine Würfelvorrichtung, die von einer Drittinstanz betreibbar ist. Beispielsweise wird die Software-Plattform von einem Spielanbieter betrieben, während die Würfelvorrichtung von der Drittinstanz, beispielsweise einem Drittanbieter betrieben wird. Weiter vorzugsweise ist der Überwachungsbereich räumlich getrennt von einem Bereich des Spielanbieters angeordnet.

Der Würfelvorgang wird beispielsweise erfasst, indem ein Video, welches den Würfelvorgang repräsentiert, erfasst bzw. aufgenommen wird.

Die Formulierung, wonach das Software-Spiel in Abhängigkeit des erfassten Würfelvorgangs bereitgestellt wird, ist vorzugsweise dahingehend zu verstehen, dass der Spielverlauf des Software-Spiels von dem Ergebnis des Würfelvorgangs abhängt. Beispielsweise repräsentiert die erzeugte Zufallszahl ein Würfelergebnis, welches Einfluss auf den weiteren Spielverlauf hat.

Es wird weiterhin in einer vorteilhaften Ausführungsform des Systems vorgeschlagen, dass die Erfassungseinrichtung eingerichtet ist, Vorgangsdaten, welche den Würfelvorgang repräsentieren, zu erzeugen, und eine Kommunikationseinheit eingerichtet ist,
- die Vorgangsdaten zu empfangen und
- über eine Kommunikationsverbindung an eine Backendeinrichtung zu senden.

Die Vorgangsdaten umfassen vorzugsweise Bilddaten, weiter vorzugsweise Videodaten, welche den Würfelvorgang repräsentieren. Weiter vorzugsweise umfassen die Vorgangsdaten eine oder mehrere erzeugte Zufallszahlen als Würfelergebnis.

Die Kommunikationsverbindung umfasst vorzugsweise ein Kommunikationsnetz, beispielsweise ein Ethernet-Netz. Weiter vorzugsweise umfasst die Kommunikationsverbindung das World Wide Web (Internet).

Vorzugsweise werden die Vorgangsdaten verschlüsselt an die Backendeinrichtung übertragen. Die Verschlüsselung erfolgt weiter vorzugsweise auf Basis eines Kryptographieverfahrens.

Es wird weiterhin in einer vorteilhaften Ausführungsform des Systems vorgeschlagen, dass - die Vorgangsdaten Bilddaten umfassen, welche den Würfelvorgang repräsentieren, und
- eine Archivierungseinrichtung eingerichtet ist, die Bilddaten zur Beweissicherung zu speichern.

Auf diese Weise wird die Zuverlässigkeit und Vertrauenswürdigkeit des Systems weiter erhöht. Gegebenenfalls können nachträglich Bilddaten von der Archivierungseinrichtung abgerufen werden, um Würfelvorgänge nachzuvollziehen.

Die Bilddaten umfassen vorzugsweise Videodaten.

Die Archivierungseinrichtung ist vorzugsweise durch eine Drittinstanz betreibbar. Beispielsweise wird die Software-Plattform von einem Spielanbieter betrieben, während die Archivierungseinrichtung von der Drittinstanz, beispielsweise einem Drittanbieter, betrieben wird. Weiter vorzugsweise ist die Archivierungseinrichtung physikalisch und räumlich getrennt von der Backendeinrichtung angeordnet.

Es wird weiterhin in einer vorteilhaften Ausführungsform des Systems vorgeschlagen, dass - die Backendeinrichtung eingerichtet ist, die empfangenen Vorgangsdaten einer Spielerschnittstelle bereitzustellen, und
- die Spielerschnittstelle eingerichtet ist, die Vorgangsdaten an einen Spieler auszugeben.

Auf diese Weise wird es dem Spieler ermöglicht, den Würfelvorgang wahrzunehmen und sich von der Vertrauenswürdigkeit des Würfelergebnisses zu überzeugen.

Beispielsweise stellt die Backendeinrichtung die Vorgangsdaten der Spielerschnittstelle als Live-Stream bereit.

Die Ausgabe umfasst vorzugsweise eine Anzeige mittels einer Anzeigeeinrichtung. Alternativ oder zusätzlich umfasst die Ausgabe vorzugsweise eine akustische Ausgabe mittels eines Lautsprechers. Die Ausgabe erfolgt vorzugsweise als Live-Stream, welcher Videodaten und Audiodaten des Würfelvorgangs repräsentiert.

Es wird weiterhin in einer vorteilhaften Ausführungsform des Systems vorgeschlagen, dass - die Erfassungseinrichtung eine Kameraeinrichtung umfasst, welche eingerichtet ist, den Würfelvorgang in einer Draufsicht-Perspektive zu erfassen.

Besonders bei quadratischen Würfeln als Teil der mechanischen Würfelvorrichtung ist die Draufsicht besonders vorteilhaft, weil das Würfelergebnis in einer Draufsicht-Perspektive besonders einfach ablesbar ist.

Vorzugsweise ist die Erfassungseinrichtung oberhalb des Überwachungsbereichs angeordnet und nach unten, d.h. im Wesentlichen lotrecht, ausgerichtet.

Es wird weiterhin in einer vorteilhaften Ausführungsform des Systems vorgeschlagen, dass - die digitale Software-Plattform eingerichtet ist, mehrere parallel verlaufende Spiele bereitzustellen,
- eine Mehrzahl von mechanischen Würfelvorrichtungen vorgesehen ist, wobei die Würfelvorrichtungen eingerichtet sind, eine Zufallszahl zu erzeugen, und
- jedem der Mehrzahl von parallel verlaufenden Spielen wenigstens eine der Mehrzahl von Würfelvorrichtungen für die Erzeugung einer Zufallszahl zugeordnet ist.

Auf diese Weise können mehrere parallel verlaufende Spiele effizient bereitgestellt und ausgeführt werden.

Vorzugsweise erfolgt die Zuordnung einer der Würfelvorrichtungen in Abhängigkeit einer freien Kapazität der Würfelvorrichtung. Auf diese Weise kann der Spielablauf effizient gestaltet werden.

Es wird weiterhin in einer vorteilhaften Ausführungsform des Systems vorgeschlagen, dass eine Blockchain-Einrichtung eingerichtet ist, die Zufallszahl mittels einer Blockchain zu speichern.

Dies hat den Vorteil, dass eine Datenmanipulation und Datenverlust von Zufallszahlen durch die Nutzung der Blockchain ausgeschlossen werden kann bzw. unmittelbar erkennbar ist. Die Nutzung der Blockchain hat insbesondere den Vorteil, dass sich gespeicherte Zufallszahlen nur ändern lassen, wenn sämtliche nachfolgenden Blöcke neu berechnet werden. Demnach ist eine Manipulation nahezu unmöglich.

Die Blockchain-Einrichtung wird vorzugsweise von einer Instanz betrieben, die unabhängig von der Backendeinrichtung ist. Weiter vorzugsweise ist die Blockchain-Einrichtung als verteiltes System ausgebildet.

Beispielsweise wird die Zufallszahl in einem Block der Blockchain gespeichert, wobei die Blockchain mehrere Blöcke umfasst. Weiter vorzugsweise ist in jedem Block die Zufallszahl eines Würfelvorgangs, der diesem Block zugeordnet ist, und ein Hashwert eines Vorgängerblocks, welcher einem in einer Reihenfolge von Würfelvorgängen vorangegangenen Würfelvorgang zugeordnet ist, gespeichert.

Es wird weiterhin in einer vorteilhaften Ausführungsform des Systems vorgeschlagen, dass - die Software-Plattform eine Servereinrichtung umfasst und
- ein Endgerät eines Spielers eine Clienteinrichtung umfasst, welche eingerichtet ist, das mittels der Software-Plattform bereitgestellte Spiel abzurufen.

Es wird weiterhin in einer vorteilhaften Ausführungsform des Systems vorgeschlagen, dass - die Würfelvorrichtung innerhalb eines transparenten und versiegelten Gehäuses angeordnet ist und
- die Erfassungseinrichtung außerhalb des versiegelten Gehäuses angeordnet ist.

Durch die Transparenz wird eine visuelle Beobachtung ermöglicht, wobei gleichzeitig durch die Versiegelung manuelle Eingriffe verhindert werden. Das Gehäuse verhindert zudem, dass die Würfel beim Würfelvorgang in einem Bereich außerhalb des Überwachungsbereichs gelangen, beispielsweise indem die Würfel von einer Auflagefläche herabfallen.

Das transparente und versiegelte Gehäuse ist beispielsweise als Glaskasten ausgebildet. Das Glas umfasst vorzugsweise Sicherheitsglas.

Gemäß einem weiteren Aspekt wird ein Verfahren zum Betreiben eines Software-Spiels vorgeschlagen, umfassend:
- Bereitstellen eines Software-Spiels mittels einer digitalen Software-Plattform, und
- Erfassen eines Überwachungsbereichs mittels einer Erfassungseinrichtung.

Das Verfahren ist vor allem dadurch gekennzeichnet, dass -eine Zufallszahl mittels einer mechanischen Würfelvorrichtung, welche zumindest teilweise innerhalb des Überwachungsbereichs angeordnet ist, erzeugt wird,
- ein mechanischer Würfelvorgang zum Erzeugen der Zufallszahl mittels der Erfassungseinrichtung erfasst wird und
- das Software-Spiel mittels der Software-Plattform in Abhängigkeit des erfassten Würfelvorgangs bereitgestellt wird.

Es wird weiterhin in einer vorteilhaften Ausführungsform des Verfahrens vorgeschlagen, dass Vorgangsdaten, welche den Würfelvorrichtung repräsentieren, erzeugt werden und
die Vorgangsdaten mittels einer Kommunikationseinheit
- empfangen werden und
- über eine Kommunikationsverbindung an eine Backendeinrichtung gesendet werden.

Es wird weiterhin in einer vorteilhaften Ausführungsform des Verfahrens vorgeschlagen, dass - die empfangenen Vorgangsdaten mittels der Backendeinrichtung einer Spielerschnittstelle bereitgestellt werden und
- die Spielerschnittstelle die Vorgangsdaten an einen Spieler ausgibt.

Es wird weiterhin in einer vorteilhaften Ausführungsform des Verfahrens vorgeschlagen, dass - die digitale Software-Plattform mehrere parallel verlaufende Spiele bereitstellt,
- eine Mehrzahl von mechanischen Würfelvorrichtungen vorgesehen ist, wobei die Würfelvorrichtungen eine Zufallszahl erzeugen, und
- jedem der Mehrzahl von parallel verlaufenden Spielen wenigstens eine der Mehrzahl von Würfelvorrichtungen für die Erzeugung einer Zufallszahl zugeordnet wird.

Es wird weiterhin in einer vorteilhaften Ausführungsform des Verfahrens vorgeschlagen, dass eine Blockchain-Einrichtung die Zufallszahl mittels einer Blockchain speichert.

Es wird weiterhin in einer vorteilhaften Ausführungsform des Verfahrens vorgeschlagen, dass - die Software-Plattform eine Servereinrichtung umfasst und
- ein Endgerät eines Spielers eine Clienteinrichtung umfasst, welche das mittels der Software-Plattform bereitgestellte Spiel abruft.

Die vorgeschlagene Lösung lässt sich mit anderen Worten wie folgt beschreiben: Der Ablauf beginnt mit einer physischen Würfelmaschine, die mit Sensorik zur Detektion der Würfelbewegung und zur präzisen Erkennung des Endergebnisses ausgestattet ist. Die Sensordaten werden unmittelbar nach Abschluss des Würfelvorgangs an einen integrierten Mikrocontroller übergeben. Der Mikrocontroller übernimmt die Datenverarbeitung in Echtzeit und leitet die erfassten Würfelergebnisse mittels WLAN-Schnittstelle an ein zentrales serverbasiertes Backend weiter. Dort erfolgt die datentechnische Zuordnung des Ergebnisses zu einem Spielereignis sowie die strukturierte Weiterverarbeitung für Spielauswertung und Anzeige auf der Benutzeroberfläche. Weiterhin umfasst das System mindestens eine bildgebende Einheit in Form einer Live-Stream-Kamera. Die Live-Stream-Kamera ermöglicht eine visuelle Dokumentation des Würfelvorgangs in Echtzeitübertragung, welche kontinuierlich Videodaten des Spielgeschehens erfasst. Diese Komponente dient sowohl der Benutzerbindung als auch der Beweissicherung im Spielverlauf. Zur Sicherstellung der Datenintegrität und zur Erfüllung regulatorischer oder spielrechtlicher Anforderungen wird ein Blockchain-Modul eingebunden. Dieses gewährleistet eine revisionssichere, unveränderbare Speicherung sämtlicher Würfelergebnisse und Spielereignisse. Die Benutzeroberfläche des Systems ist plattformunabhängig konzipiert und über verschiedene Endgeräte (z. B. Smartphones, Tablets, PCs) zugänglich. Dadurch ist eine hohe Nutzerfreundlichkeit sowie eine flexible Einsatzmöglichkeit im privaten wie im professionellen Kontext gewährleistet. Dieses technische Zusammenspiel schafft die Grundlage für eine innovative, vertrauenswürdige und skalierbare Lösung zur automatisierten Würfelauswertung und Spielanalyse - mit potenziellen Anwendungen in den Bereichen Gaming, Glücksspiel und interaktive Events.

Die vorgeschlagene Lösung umfasst Merkmale einer Software: Die vorgesehene neue Online-Backgammon-Plattform ist darauf ausgelegt, den funktionalen Standards marktführender Systeme zu entsprechen. Dies umfasst unter anderem eine vollständige Implementierung spieltechnischer Funktionen, eine strukturierte Benutzeroberfläche für den Lobbybereich, anpassbare Darstellungsoptionen sowie die Möglichkeit zur Integration von Kommunikationsschnittstellen, die insbesondere das Eingliedern der Live-Stream-Kamera zur Echtzeit-Interaktion der Nutzer umfasst. Die neue Plattform ermöglicht es selbstverständlich, Backgammon und andere Würfelspiele geräteübergreifend zu spielen - sie ist vollständig kompatibel mit PC, Tablet und Handy. Ferner umfasst die vorgeschlagene Lösung Merkmale einer Hardware: Die Würfelmaschine verfügt über eine Membran als Auflagefläche, die durch Vibration oder Luftdruck in Bewegung versetzt wird, auf der zwei Präzisionswürfel liegen. Eine Glasabdeckung verhindert das Herabfallen der Würfel. Über der Glasabdeckung ist die Live-Stream-Kamera angebracht. Die Würfelmaschine ist an einem zentralen, von den Nutzern physisch getrennten Standort installiert. Diese Maschine ist funktional mit der Online-Plattform verbunden und steht sämtlichen registrierten Teilnehmern der Plattform zur Verfügung. Die Aktivierung der Würfelmaschine erfolgt nicht permanent, sondern gezielt auf Anforderung eines Teilnehmers bei Bedarf eines Würfelergebnisses während des Spielverlaufs. Bei entsprechendem Bedarf können mehrere Würfelmaschinen parallel und nach demselben Verfahren in Betrieb genommen werden.

Die vorgeschlagene Lösung betrifft gemäß einem weiteren Aspekt ein hybrides System zur Integration eines vernetzten Software-Spiels unter Verwendung einer physischen Würfelmaschine und einer digitalen Softwareplattform, bei dem eine Live-Stream-Kamera in den Ablauf eingebunden ist; dadurch gekennzeichnet , dass eine physische Würfelmaschine einen mechanischen Würfelmechanismus zur Generierung von Zufallsergebnissen integriert und mit Sensoren zur präzisen Erfassung und Auswertung der gewürfelten Ergebnisse ausgestattet ist.

Nach einer Ausführungsform des vorstehend genannten weiteren Aspekts verarbeitet ein Mikrocontroller die erfassten Sensordaten der Würfelmaschine und leitet diese über ein integriertes WLAN-Modul zur drahtlosen Übertragung an ein zentrales Server-Backend weiter.

Nach einer weiteren Ausführungsform des vorstehend genannten weiteren Aspekts verarbeitet das Server-Backend die empfangenen Daten des Mikrocontrollers in Echtzeit. Dabei werden die empfangenen Daten automatisch mit dem zugehörigen Spielereignis korreliert, gespeichert und das Spielerinterface entsprechend aktualisiert.

Nach einer weiteren Ausführungsform des vorstehend genannten weiteren Aspekts ist eine Live-Stream-Kamera in einer Top-View-Perspektive oberhalb der Würfelkammer angebracht. Die Live-Stream-Kamera ermöglicht eine visuelle und auditive Dokumentation des Würfelvorgangs in Echtzeit und überträgt den Würfelvorgang kontinuierlich auf der Benutzeroberfläche der digitalen Spielplattform als Videostream.

Bei einer weiteren bevorzugten Ausführungsform des vorstehend genannten weiteren Aspekts werden mehrere Würfelmaschinen parallel und synchron betrieben. Dabei sieht der Spielauswahlprozess eine automatische Zuweisung der jeweils verfügbaren Maschine vor.

Gemäß einer weiteren bevorzugten Ausführungsform des vorstehend genannten weiteren Aspekts erfolgt die Speicherung manipulationssicher und revisionsfest in einer Blockchain, wodurch eine für alle Spieler einsehbare und nachvollziehbare Historie des Spielverlaufs gewährleistet wird.

Bei einer weiteren bevorzugten Ausführungsform des vorstehend genannten weiteren Aspekts archiviert die Live-Stream-Kamera-Funktion auch zur Beweissicherung aufgezeichnete Sequenzen des Würfelvorgangs, welche bei Streitfällen abrufbar sind.

Nach einer weiteren bevorzugten Ausführungsform des vorstehend genannten weiteren Aspekts ist die Plattform geräteunabhängig über Webbrowser auf PCs, Tablets und Smartphones nutzbar.

Bei einer weiteren bevorzugten Ausführungsform des vorstehend genannten weiteren Aspekts ist das System unabhängig von einem spezifischen Würfelspiel ausgestaltet. Dabei ist in strukturierter Form eine Adaption auf andere Würfelspielvarianten mit abweichender Spielmechanik ermöglicht.

Gemäß einer weiteren bevorzugten Ausführungsform des vorstehend genannten weiteren Aspekts ist die Würfelmaschine in einem versiegelten, transparenten Gehäuse angeordnet, das eine visuelle Beobachtung ermöglicht, jedoch manuelle Eingriffe verhindert.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
Fig. 1: ein Ausführungsbeispiel eines erfindungsgemäßen Systems; und
Fig. 2: ein Ausführungsbeispiel eines erfindungsgemäßen Verfahrens.

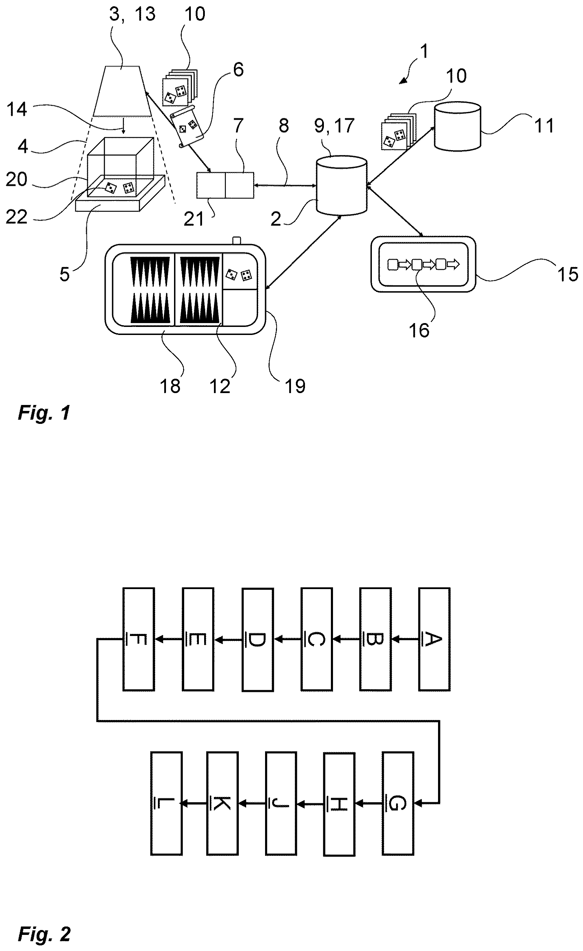

In Fig. 1 ist ein System **1** zum Betreiben eines Software-Spiels in einer schematischen Darstellung gezeigt.

In Fig. 2 ist ein schematisches Ablaufdiagramm gezeigt, welches die Schritte des erfindungsgemäßen Verfahrens zum Betreiben eines Software-Spiels repräsentiert. Im Folgenden wird das in Fig. 2 gezeigten erfindungsgemäßen Verfahren in Verbindung mit dem in Fig. 1 gezeigten erfindungsgemäßen System **1** beschrieben.

Das System **1** weist eine Software-Plattform **2** auf, welche eingerichtet ist, das Software-Spiel bereitzustellen. In einem Verfahrensschritt A stellt die Software-Plattform **2** das Software-Spiel bereit, indem beispielsweise ein Computerprogramm ausgeführt wird, welches das Software-Spiel repräsentiert. Die Software-Plattform **2** umfasst eine Servereinrichtung **17.** Spieler des Software-Spiels rufen dieses mittels eines Endgeräts **18,** welches eine Clienteinrichtung **19** umfasst, von der Servereinrichtung **17** ab. Die Servereinrichtung **17** und die Clienteinrichtung **19** kommunizieren über das World Wide Web (Internet).

Im Rahmen der Durchführung des Software-Spiels tritt die Situation auf, dass der weitere Spielverlauf von einem Würfelergebnis abhängt. Dies ist beispielsweise bei dem Spiel Backgammon der Fall, bei dem der Spieler, welcher am Zug ist, mit je zwei Würfeln würfelt. Bei der vorliegenden Erfindung löst der Spieler das Würfeln unter Verwendung seines Endgeräts **18** aus. Hierfür betätigt der Spieler ein entsprechendes graphische Betätigungselement auf dem Endgerät **18.** Eine Betätigungsinformation, welche die Betätigung repräsentiert, wird ausgehend von dem Endgerät **18** über das Internet an die Software-Plattform **2** übertragen. Die Software-Plattform **2** registriert die Betätigungsinformation und verarbeitet diese. Beispielsweise prüft die Software-Plattform **2,** ob die Betätigungsinformation von einem Spieler stammt, der am Zug ist. Die Software-Plattform **2** sendet die Betätigungsinformation über eine Kommunikationseinheit **7** an eine mechanische Würfelvorrichtung **5,** welche eingerichtet ist, eine Zufallszahl zu erzeugen. Die Würfelvorrichtung **5** umfasst zwei Würfel **22.**

In einem Verfahrensschritt B wird die Zufallszahl mittels der mechanischen Würfelvorrichtung **5** (auf die Betätigung des Spielers hin) erzeugt. Die mechanische Würfelvorrichtung **5** ist innerhalb eines Überwachungsbereichs **4** angeordnet. Die mechanische Würfelvorrichtung **5** ist ferner derart innerhalb eines transparenten und versiegelten Gehäuses **20** angeordnet, dass eine Einflussnahme auf den Würfelvorgang verhindert wird und die Würfel **22** an einem Herabfallen von einer Auflagefläche gehindert werden.

Die Würfelvorrichtung **5** weist als Würfel **22** zwei Präzisionswürfel auf, welche auf einer Membran als Auflagefläche liegen. Zum Erzeugen der Zufallszahl wird die Membran durch eine Vibration (beispielsweise mittels Luftdrucks) in Bewegung versetzt. Diese führt zum Würfeln der Würfel **22.**

Das System **1** weist ferner eine Erfassungseinrichtung **3** auf, welche eingerichtet ist, den Überwachungsbereich **4** zu erfassen. Die Erfassungseinrichtung **3** weist eine Kameraeinrichtung **13** auf. Die Erfassungseinrichtung **3** ist außerhalb des Gehäuses **20** angeordnet. Zudem ist die Erfassungseinrichtung **3** oberhalb des Gehäuses **20** angeordnet und ausgerichtet, die Auflagefläche in einer Draufsicht-Perspektive **14** zu erfassen. In einem Verfahrensschritt C erfasst die Erfassungseinrichtung **3** den mechanischen Würfelvorgang in der Draufsicht-Perspektive **14.** Hierfür erfasst die Kameraeinrichtung **13** ein Video des Würfelvorgangs. In einem Verfahrensschritt D erzeugt die Kameraeinrichtung **13** Vorgangsdaten **6** in Form von Bilddaten **10,** die den Würfelvorgang repräsentieren. Die Erfassungseinrichtung **3** weist ferner optional eine Sensoreinrichtung auf, welche das Ergebnis des Würfelvorgangs als Zufallszahl erkennt.

Die Vorgangsdaten **6** werden in einem Verfahrensschritt E von einer Kommunikationseinheit **7** empfangen. Mit einer der Kommunikationseinheit **7** zugeordneten Rechnereinrichtung **21,** beispielsweise als Teil eines Mikrocontrollers, werden die Vorgangsdaten **6** verarbeitet und zwischengespeichert. In einem Verfahrensschritt F werden die Vorgangsdaten **6** über die Kommunikationsverbindung **8** an eine Backendeinrichtung **9** gesendet. Hierbei ist die vorstehend genannte Software-Plattform **2** Teil der Backendeinrichtung **9.** Die Kommunikationseinheit **7** sendet die Vorgangsdaten **6** drahtlos über einen WLAN-Zugangspunkt und das Word Wide Web (Internet) an die Backendeinrichtung **9.** Die Backendeinrichtung **9** ist beispielsweise ein Backendserver.

Alternativ oder zusätzlich zu der Erkennung der Zufallszahl mittels der vorstehend beschriebenen Sensoreinrichtung, weist die Backendeinrichtung **9** eine Erkennungseinrichtung auf, welche die erzeugte Zufallszahl anhand der Vorgangsdaten **6** erkennt. Beispielsweise wendet die Erkennungseinrichtung einen Bilderkennungsalgorithmus an, welcher anhand der Bilddaten **10** das Würfelergebnis als Zufallszahl erkennt.

Ferner werden die Bilddaten **10** an eine Archivierungseinrichtung **11** übertragen und in einem Verfahrensschritt G mittels der Archivierungseinrichtung **11** zur Beweissicherung gespeichert. Die beim Würfelvorgang erzeugte Zufallszahl wird in einem Verfahrensschritt H in einer Blockchain-Einrichtung **15** mittels einer Blockchain **16** gespeichert. Die Blockchain-Einrichtung **15** wird von einer Instanz betrieben, die unabhängig von der Backendeinrichtung **9** ist. Zudem ist die Blockchain-Einrichtung **15** als verteiltes System **1** ausgeführt. Beispielsweise wird die Zufallszahl in einem Block der Blockchain **16** gespeichert, wobei die Blockchain **16** mehrere Blöcke umfasst. In jedem Block ist die Zufallszahl eines Würfelvorgangs, der diesem Block zugeordnet ist, und ein Hashwert eines Vorgängerblocks, welcher einem in einer Reihenfolge von Würfelvorgängen vorangegangenen Würfelvorgang zugeordnet ist, gespeichert.

In einem Verfahrensschritt J werden die empfangenen Vorgangsdaten **6** durch die Backendeinrichtung **9** mehreren Spielerschnittstellen **12** bereitgestellt. Hierfür werden die Vorgangsdaten **6** ausgehend von der Backendeinrichtung **9** an die Endgeräte **18** der an dem laufenden Spiel beteiligten Spieler übertragen. Das jeweilige Endgerät **18** weist die Spielerschnittstelle **12** in Form eines Touchscreens auf. Die Spielerschnittstelle **12** gibt die Vorgangsdaten **6** in einem Verfahrensschritt K an den jeweiligen Spieler aus. Die Ausgabe erfolgt beispielsweise als Live-Stream des Würfelvorgangs.

In einem Verfahrensschritt L stellt die Software-Plattform **2** das Software-Spiel in Abhängigkeit des erfassten Würfelergebnisses bereit. So wird das Software-Spiel anhand des Würfelergebnisses weiter ausgeführt. Beispielsweise werden ausschließlich diejenigen Spielzüge zugelassen, die gemäß den Spielregeln bei dem vorliegenden Würfelergebnis erlaubt sind.

Das vorstehend beschrieben Ausführungsbeispiel ist mit anderen Worten wie folgt beschreibbar:
Vor der Teilnahme ist eine Registrierung erforderlich. Nach erfolgreicher Anmeldung mittels Benutzername und Passwort erhält der Nutzer Zugang zur Plattformoberfläche im sogenannten Lobbybereich. Innerhalb dieses Bereichs kann der Nutzer zwischen verschiedenen Spielmodi wie Echtgeld oder Spielgeldmodus wählen, Gegenspieler bestimmen sowie individuelle Spielparameter insbesondere Spiellänge, Einsatzhöhe und vergleichbare Einstellungen konfigurieren.

Ein Spielbeginn erfolgt automatisch mit der Startaufstellung des Spiels, sobald zwei Nutzer die jeweiligen zuvor definierten Spielbedingungen verbindlich akzeptiert haben.

Das Fenster für die Live-Stream-Kamera mit Top-view auf die Würfelmaschine, wird im oberen rechten Bereich des Benutzerbildschirms angezeigt und bleibt während des gesamten Spiels sichtbar.

Die Spieler können nun per Aufforderung (Klick) die Würfelmaschine für ihren benötigten Spielzug in Gang setzen; nun werden die Würfel **22** auf der Würfelmaschine gestartet, nach 3 Sekunden endet die Vibration und die ruhenden Würfelzahlen werden vom Erkennungssystem erfasst und virtuell auf dem Benutzerbildschirm angezeigt. Für 5 Sekunden bleiben die geworfenen Würfelzahlen unverändert auf dem Live-Stream-Kamera sichtbar bevor die Würfelmaschine in den Wartemodus wechselt. Diesen gesamten Vorgang mit der Würfelmaschine können jeweils beide Gegner in Echtzeit auf ihren'm Live-Stream-Kamera-Fenster mitverfolgen. Die Würfelergebnisse werden automatisch vom Spielsystem erfasst und verschlüsselt an die Server-Software übermittelt. Anschließend führen die Spieler ihre Spielzüge abwechselnd gemäß den gewünschten Zahlen durch und setzen diese regelkonform auf ihrem jeweiligen Spielfeld um.

Die Software wertet die Spielzüge in Echtzeit aus, aktualisiert den Spielstand und stellt das Ergebnis unmittelbar auf dem Bildschirm der Nutzer dar.

Mit dem hier vorgeschlagenen System zum Betreiben eines Software-Spiels wird ein Höchstmaß an Transparenz und Fairness gewährleistet.

### Bezugszeichenliste

- 1: System
- 2: Software-Plattform
- 3: Erfassungseinrichtung
- 4: Überwachungsbereich
- 5: Würfelvorrichtung
- 6: Vorgangsdaten
- 7: Kommunikationseinheit
- 8: Kommunikationsverbindung
- 9: Backendeinrichtung
- 10: Bilddaten
- 11: Archivierungseinrichtung
- 12: Spielerschnittstelle
- 13: Kameraeinrichtung
- 14: Draufsicht-Perspektive
- 15: Blockchain-Einrichtung
- 16: Blockchain
- 17: Servereinrichtung
- 18: Endgerät
- 19: Clienteinrichtung
- 20: Gehäuse
- 21: Rechnereinrichtung
- 22: Würfel

## Patentansprüche

1. System (1) zum Betreiben eines Software-Spiels, umfassend:
- eine digitale Software-Plattform (2), welche eingerichtet ist, das Software-Spiel bereitzustellen, und
- eine Erfassungseinrichtung (3), welche eingerichtet ist, einen Überwachungsbereich (4) zu erfassen,
**dadurch gekennzeichnet, dass**
- eine mechanische Würfelvorrichtung (5) zumindest teilweise innerhalb des Überwachungsbereichs (4) angeordnet ist und eingerichtet ist, eine Zufallszahl zu erzeugen,
- die Erfassungseinrichtung (3), eingerichtet ist, einen mechanischen Würfelvorgang zum Erzeugen der Zufallszahl zu erfassen, und
- die Software-Plattform (2) eingerichtet ist, das Software-Spiel in Abhängigkeit des erfassten Würfelvorgangs bereitzustellen.

2. System (1) nach Anspruch 1, **dadurch gekennzeichnet, dass**
die Erfassungseinrichtung (3) eingerichtet ist, Vorgangsdaten (6), welche den Würfelvorgang repräsentieren, zu erzeugen, und
eine Kommunikationseinheit (7) eingerichtet ist,
- die Vorgangsdaten (6) zu empfangen und
- über eine Kommunikationsverbindung (8) an eine Backendeinrichtung (9) zu senden.

3. System (1) nach Anspruch 1 oder Anspruch 2, **dadurch gekennzeichnet, dass**
- die Vorgangsdaten (6) Bilddaten (10) umfassen, welche den Würfelvorgang repräsentieren, und
- eine Archivierungseinrichtung (11) eingerichtet ist, die Bilddaten (10) zur Beweissicherung zu speichern.

4. System (1) nach Anspruch 2 oder Anspruch 3, **dadurch gekennzeichnet, dass**
- die Backendeinrichtung (9) eingerichtet ist, die empfangenen Vorgangsdaten (6) einer Spielerschnittstelle (12) bereitzustellen, und
- die Spielerschnittstelle (12) eingerichtet ist, die Vorgangsdaten (6) an einen Spieler auszugeben.

5. System (1) nach einem der vorhergehenden Ansprüche, **dadurch gekennzeichnet, dass**
- die Erfassungseinrichtung (3) eine Kameraeinrichtung (13) umfasst, welche eingerichtet ist, den Würfelvorgang in einer Draufsicht-Perspektive (14) zu erfassen.

6. System (1) nach einem der vorhergehenden Ansprüche, **dadurch gekennzeichnet, dass**
- die digitale Software-Plattform (2) eingerichtet ist, mehrere parallel verlaufende Spiele bereitzustellen,
- eine Mehrzahl von mechanischen Würfelvorrichtungen (5) vorgesehen ist, wobei die Würfelvorrichtungen (5) eingerichtet sind, eine Zufallszahl zu erzeugen, und
- jedem der Mehrzahl von parallel verlaufenden Spielen wenigstens eine der Mehrzahl von Würfelvorrichtungen (5) für die Erzeugung einer Zufallszahl zugeordnet ist.

7. System (1) nach einem der vorhergehenden Ansprüche, **dadurch gekennzeichnet, dass**
eine Blockchain-Einrichtung (15) eingerichtet ist, die Zufallszahl mittels einer Blockchain (16) zu speichern.

8. System (1) nach einem der vorhergehenden Ansprüche, **dadurch gekennzeichnet, dass**
- die Software-Plattform (2) eine Servereinrichtung (17) umfasst und
- ein Endgerät (18) eines Spielers eine Clienteinrichtung (19) umfasst, welche eingerichtet ist, das mittels der Software-Plattform (2) bereitgestellte Spiel abzurufen.

9. System (1) nach einem der vorhergehenden Ansprüche, **dadurch gekennzeichnet, dass**
- die Würfelvorrichtung (5) innerhalb eines transparenten und versiegelten Gehäuses (20) angeordnet ist und
- die Erfassungseinrichtung (3) außerhalb des versiegelten Gehäuses (20) angeordnet ist.

10. Verfahren zum Betreiben eines Software-Spiels, umfassend:
- Bereitstellen (A) eines Software-Spiels mittels einer digitalen Software-Plattform (2), und
- Erfassen (C) eines Überwachungsbereichs (4) mittels einer Erfassungseinrichtung (3),
**dadurch gekennzeichnet, dass**
- eine Zufallszahl mittels einer mechanischen Würfelvorrichtung (5), welche zumindest teilweise innerhalb des Überwachungsbereichs (4) angeordnet ist, erzeugt wird (B),
- ein mechanischer Würfelvorgang zum Erzeugen der Zufallszahl mittels der Erfassungseinrichtung (3) erfasst wird (C) und
- das Software-Spiel mittels der Software-Plattform (2) in Abhängigkeit des erfassten Würfelvorgangs bereitgestellt wird (L).

11. Verfahren nach Anspruch 10, **dadurch gekennzeichnet, dass** Vorgangsdaten (6), welche den Würfelvorrichtung (5) repräsentieren, erzeugt werden und
die Vorgangsdaten (6) mittels einer Kommunikationseinheit (7)
- empfangen werden und
- über eine Kommunikationsverbindung (8) an eine Backendeinrichtung (9) gesendet werden.

12. Verfahren nach Anspruch 11, **dadurch gekennzeichnet, dass**
- die empfangenen Vorgangsdaten (6) mittels der Backendeinrichtung (9) einer Spielerschnittstelle (12) bereitgestellt werden und
- die Spielerschnittstelle (12) die Vorgangsdaten (6) an einen Spieler ausgibt.

13. Verfahren nach einem der vorhergehenden Ansprüche 10 bis 12, **dadurch gekennzeichnet, dass**
- die digitale Software-Plattform (2) mehrere parallel verlaufende Spiele bereitstellt,
- eine Mehrzahl von mechanischen Würfelvorrichtungen (5) vorgesehen ist, wobei die Würfelvorrichtungen (5) eine Zufallszahl erzeugen, und
- jedem der Mehrzahl von parallel verlaufenden Spielen wenigstens eine der Mehrzahl von Würfelvorrichtungen (5) für die Erzeugung einer Zufallszahl zugeordnet wird.

14. Verfahren nach einem der vorhergehenden Ansprüche 10 bis 13, **dadurch gekennzeichnet, dass**
eine Blockchain-Einrichtung (15) die Zufallszahl mittels einer Blockchain (16) speichert.

15. Verfahren nach einem der vorhergehenden Ansprüche 10 bis 14, **dadurch gekennzeichnet, dass**
- die Software-Plattform (2) eine Servereinrichtung (17) umfasst und
- ein Endgerät (18) eines Spielers eine Clienteinrichtung (19) umfasst, welche das mittels der Software-Plattform (2) bereitgestellte Spiel abruft.
